# EUROPÄISCHE PATENTSCHRIFT

(11) **EP 2 225 153 B1**
(45) Veröffentlichungstag und Bekanntmachung des Hinweises auf die Patenterteilung: **01.06.2011**
(21) Anmeldenummer: 08852697.5
(22) Anmeldetag: 20.11.2008
(51) Int. Cl.: B64C 1/06

(54) **KUPPLUNGSVORRICHTUNG ZUM ZUSAMMENFÜGEN VON RUMPFSEKTIONEN, KOMBINATION AUS EINER KUPPLUNGSVORRICHTUNG UND ZUMINDEST EINER RUMPFSEKTION SOWIE VERFAHREN ZUR HERSTELLUNG DER KUPPLUNGSVORRICHTUNG**
COUPLING DEVICE FOR JOINING FUSELAGE SECTIONS, COMBINATION OF A COUPLING DEVICE AND AT LEAST ONE FUSELAGE SECTION, AND METHOD FOR PRODUCING SAID COUPLING DEVICE
DISPOSITIF D'ASSEMBLAGE DE TRONÇONS DE FUSELAGE, ENSEMBLE CONSTITUÉ D'UN DISPOSITIF D'ASSEMBLAGE ET D'AU MOINS UN TRONÇON DE FUSELAGE ET PROCÉDÉ DE FABRICATION DU DISPOSITIF D'ASSEMBLAGE

(30) Priorität: 20.11.2007 US 989234 P; 20.11.2007 DE 102007055233
(43) Veröffentlichungstag der Anmeldung: 08.09.2010
(73) Patentinhaber: Airbus Operations GmbH, 21129 Hamburg (DE)
(72) Erfinder: DIETRICH, Steffen, 20257 Hamburg (DE); GEWIONTEK, Wolfgang, 21680 Stade (DE)
(74) Vertreter: Schatt, Markus F.
(86) Internationale Anmeldenummer: PCT/EP2008/009833
(87) Internationale Veröffentlichungsnummer: WO 2009/065587

(56) Entgegenhaltungen:
- US-A- 5 518 208
- US-A1- 2004 031 879

## Beschreibung

Die Erfindung betrifft eine Kupplungsvorrichtung zur Verbindung von Rumpfsektionen unter Bildung jeweils eines Querstoßbereichs zur Schaffung einer Flugzeugrumpfzelle.

Darüber hinaus hat die Erfindung ein Verfahren zur Herstellung einer solchen Kupplungsvorrichtung zum Gegenstand.

Das Dokument US 2004/031879 A1 beschreibt ein konusförmiges Endstück eines Hubschrauberrumpfes mit einer Monocoque-Außenhaut und einem Endkonusbefestigungs-Anschlussstück zur Befestigung des Endstücks am Hauptrumpf. Optional können auf der Innenseite der Außenhaut Stützstreben befestigt sein.

Das Dokument US 5 518 208 A beschreibt eine Kupplungsvorrichtung zur Verbindung von Rumpfsektionen.

Flugzeugrümpfe in Aluminiumbauweise werden durch das Aneinanderfügen mehrerer vorgefertigter, im Wesentlichen tonnenförmiger Rumpfsektionen hergestellt. Die Rumpfsektionen sind mit einer Vielzahl von hintereinander angeordneten Ringspanten gebildet, die mit der Rumpfzellenhaut beplankt sind. Die Rumpfsektionen sind mit Längsversteifungselementen, insbesondere mit so genannten Stringern ausgesteift, die im Wesentlichen zur Längsachse der Rumpfsektion verlaufen. Die Stringer sind gleichmäßig zueinander beabstandet über den Umfang hinweg verteilt auf einer Innenseite der Rumpfzellenhaut angeordnet. Zur Durchführung der Stringer weisen die Ringspanten jeweils Ausnehmungen auf. In einem Kreuzungsbereich zwischen den Ringspanten und den Stringern sind zusätzliche Stützwinkel zur weiteren Versteifung angeordnet. Darüber hinaus erfolgt außerhalb des Quemahtbereichs eine mechanische Verbindung zwischen den Stringern, den Ringspanten sowie der Rumpfhaut durch eine Vielzahl von Knotenblechen (so genannte "Clips").

Zum Zusammenfügen der Rumpfsektionen werden Querstoßlaschen zur Verbindung der Rumpfzellenhäute und Stringerkupplungen für Stoßverbindungen zwischen den einzelnen Stringern eingesetzt. Um zu gewährleisten, dass die Stringer mittels der Kupplungen verbunden werden können, werden die Stringer in einem Endbereich der Rumpfsektion, der etwa einer Länge einer Spantteilung entspricht, erst im Zuge der Vernietung der Querstoßlasche mit der Rumpfzellenhaut verbunden.

Von Nachteil ist, dass die aktuelle Kupplungstechnik zum Zusammenfügen von vorgefertigten Rumpfsektionen eine große Anzahl von Einzelteilen und hierdurch bedingt einen hohen Montageaufwand erfordert.

Aufgabe der Erfindung ist es, eine Kupplungsvorrichtung und ein Verfahren bereitzustellen, mit der bzw. mit dem die Kupplungstechnik insbesondere hinsichtlich des Montageaufwands verbessert wird.

Diese Aufgabe wird durch eine Kupplungsvorrichtung mit den Merkmalen der unabhängigen Ansprüche gelöst. Weitere Ausführungsformen sind in den auf diese rückbezogenen Unteransprüchen angegeben.

Erfindungsgemäß ist eine Kupplungsvorrichtung vorgesehen, aufweisend: einen länglichen oder im Wesentlichen streifenförmig ausgebildeten Mittelabschnitt zur Kupplung oder Ankopplung der zwei zu verbindenden Rumpfzellenhäute, einen Steg zur Kupplung eines Ringspants, der derart auf dem Ringspant angeordnet ist, dass dessen Mittelebene in dessen Längsrichtung gesehen winklig und insbesondere senkrecht auf der Mittelebene des Mittelabschnitts in dessen Längsrichtung gesehen verläuft, eine Vielzahl von sich beidseitig von dem Mittelabschnitt erstreckenden rippenartigen Stringerkupplungsteilen zur Kupplung von Stringern, wobei die Längserstreckung der Stringerkupplungsteile quer und insbesondere senkrecht zur Längsrichtung des Mittelabschnitts verläuft, Verdickungen in Kreuzungsbereichen zwischen den Stringerkupplungsteilen und dem Steg.

Infolge dieser Ausgestaltung können mit nur einem integralen, einstückigen Kupplungsbauteil beide Rumpfzellenhäute, die Stringer, die Stützwinkel sowie die Ringspante im Querstoßbereich zusammengefügt, insbesondere miteinander vernietet, werden. Hierdurch reduziert sich eine notwendige Anzahl von Kupplungsbauteilen sowie der erforderliche Aufwand bei der Herstellung einer Querstoßverbindung zwischen zwei zusammenzufügenden Rumpfsektionen.

Alternativ ist es möglich, die Kupplungsvorrichtung mehrteilig auszubilden, das heißt mehrere Kupplungsvorrichtungen innenseitig über den Umfang der Rumpfsektion hinweg verteilt anzuordnen, die für sich betrachtet jedoch wiederum einstückig ausgestaltet sind. Die Verbindung der einzelnen Komponenten der Rumpfstruktur mittels der Kupplungsvorrichtung erfolgt bevorzugt durch Nietelemente. Anstelle von konventionellen Nietverbindungen können auch Schraubverbindungen, Klebeverbindungen, Klemmverbindungen oder eine beliebige Kombination der genannten Verbindungstechniken zur Anwendung kommen. Zur Herstellung der erforderlichen Druckdichtigkeit ist es vorteilhaft, im Bereich der Kupplungsvorrichtung zusätzliche Dichtungsmaßnahmen, wie beispielsweise die Einbringung bzw. Aufbringung von flüssigen und/oder festen Dichtmitteln, vorzusehen.

Das Kupplungsvorrichtung ist bevorzugt mit einem Aluminiumlegierungsmaterial, mit einer Edelstahllegierung oder einer Titanlegierung gebildet. Alternativ ist es möglich, das Kupplungsvorrichtung mit einem CFK-Verbundmaterial auszubilden, wobei die Ausrichtung der Verstärkungsfasern bevorzugt kraftflussorientiert erfolgt. Die zu verbindenden Rumpfsektionen sind in der Regel vollständig mit Aluminiumlegierungsmaterialien (klassische Aluminiumbauweise) hergestellt. Grundsätzlich ist es jedoch möglich, das Kupplungsvorrichtung auch zur Verbindung von Rumpfsektionen, die vollständig oder zumindest teilweise mit CFK-Verbundmaterialien (so genannte Aluminium-CFK-Hybridbauweise) gebildet sind, einzusetzen. Hierbei ist jedoch besonderes Augenmerk auf unterschiedliche Temperaturausdehnungskoeffizienten und/oder Korrosionsprobleme im Kontaktbereich zwischen den metallischen Komponenten der Rumpfsektionen und solchen aus CFK-Verbundmaterialien zu richten.

Durch die einstückige Gestaltung der Kupplungsvorrichtung kann die notwendige Anzahl der zum Zusammenfügen von zwei Rumpfsektionen erforderlichen Bauteile, insbesondere die Anzahl von Verbindungslaschen oder dergleichen, im Querstoßbereich verringert werden.

Nach Maßgabe einer weiteren vorteilhaften Ausführungsform bilden mindestens zwei Kupplungsvorrichtungen einen Umfang der Rumpfsektion ab.

Bevorzugt werden für jeden herzustellenden Querstoß zwischen zwei zusammen zu fügenden Rumpfsektionen mindestens zwei, für sich betrachtet jeweils einstückig ausgestaltete integrale Kupplungsvorrichtungen eingesetzt, die auf der Innenseite der zu fügenden Rumpfsektionen im Querstoßbereich im Wesentlichen aneinander anschließend angeordnet werden. Vorzugsweise werden jedoch mindestens drei Kupplungsvorrichtungen (120°-Umfangsteilung oder kleiner) zur Verbindung von zwei Rumpfsektionen im Querstoßbereich eingesetzt.

Alternativ ist es aber auch möglich, eine Querstoßverbindung zwischen zwei zusammenzufügenden Rumpfsektionen unter Verwendung nur einer einzigen Kupplungsvorrichtung zu schaffen.

Gemäß einer weiteren Ausgestaltung des Kupplungsvorrichtung entsprechen die Abstände zwischen den jeweiligen Rippenfortsätzen der Kupplung jeweils den Abständen zwischen den Stringern.

Hierdurch wird eine weitgehend spannungsfreie Verbindung zwischen den Rumpfsektionen erreicht.

Eine weitere vorteilhafte Weiterbildung der Kupplungsvorrichtung sieht vor, dass der Mittelabschnitt im Wesentlichen einer Krümmung der Rumpfsektion angepasst ist. Infolge der Anpassung zwischen den Krümmungsradien der Rumpfsektion und dem Mittelabschnitt der Kupplungsvorrichtung ist gleichfalls eine weitgehend spannungsfreie Montage der Kupplungsvorrichtung gegeben.

Erfindungsgemäß ist insbesondere eine Kupplungsvorrichtung zur Kupplung von Rumpfsektionen, die jeweils zumindest einen Rumpfzellen-Hautabschnitt und eine Mehrzahl von Ringspanten und Stringern aufweisen, in einem Querstoßbereich, die Kupplungsvorrichtung aufweisend:
■ einen Kupplungsteil-Grundkörper mit einer sich in Umfangsrichtung der Rumpfsektionen erstreckenden Querstoßlasche zur Kupplung von zwei Rumpfzellen-Hautabschnitten,

■ einen mittig auf der Querstoßlasche verlaufenden und von diesem abstehenden Steg zur Anordnung eines Ringspants auf dessen freiliegenden Endbereich,
■ eine Mehrzahl von sich beidseitig von der Querstoßlasche erstreckenden rippenartigen Stringerkupplungsteile zur Kupplung der Stringer, wobei von jeweils zwei Stringerkupplungsteilen diese sich jeweils auf entgegen gesetzt zueinander liegenden Seiten des Kupplungsteil-Grundkörpers erstrecken,
   wobei die Kupplungsvorrichtung einstückig ausgebildet ist.

Die Kupplungsvorrichtung kann insbesondere einstückig hergestellt sein. Auch kann die Kupplungsvorrichtung Verdickungen in Kreuzungsbereichen zwischen den Stringerkupplungsteilen und dem Steg aufweisen. Weiterhin kann die Kupplungsvorrichtung auf jeder Seite der Längserstreckung der Querstoßlasche jeweils zumindest zwei Stringerkupplungsteile aufweisen.

Die Unterseite der Querstoßlasche kann in deren Längsrichtung gesehen zumindest abschnittsweise gekrümmt ausgebildet sein.

Weiterhin kann die Kupplungsvorrichtung eine Mehrzahl von Bohrungen zur Kupplung der Kupplungsvorrichtung an die Rumpfzellenhäute, die Stringer sowie einen Ringspant mit einer Mehrzahl von Verbindungselementen, insbesondere mit Nietelementen, aufweisen.

Zur Kupplung der Kupplungsvorrichtung mit jeweils einem Stringer kann die Kupplungsvorrichtung eine Mehrzahl von Stützwinkeln zur Kupplung der Kupplungsvorrichtung mit jeweils einem Stringer aufweisen, wobei die Stützwinkel über Verbindungselemente an der Querstoßlaschen-Rippe angekoppelt sein können.

Die Kupplungsvorrichtung kann mit einer Aluminiumlegierung, einer Titanlegierung oder einer Edelstahllegierung gebildet sein. Die Stringerkupplungsteile können eine Z-förmige Querschnittsgeometrie oder eine L-förmige Querschnittsgeometrie aufweisen. Alternativ können die Stringerkupplungsteile eine Ω-förmige Querschnittsgeometrie oder eine umgekehrt T-förmige Querschnittsgeometrie aufweisen.

Erfindungsgemäß ist auch eine Kombination aus einer Kupplungsvorrichtung nach der Erfindung und zumindest einer Rumpfsektion vorgesehen, wobei Abstände zwischen den Anlageflächen der Stringerkupplungsteile an den Stringern ±10% gleich sind den Abständen zwischen den Anlageflächen der Stringer an den Stringerkupplungsteilen.

Die erfindungsgemäße Kombination kann so gestaltet sein, dass mindestens zwei Kupplungsvorrichtungen einen Umfang zumindest einer der zu kuppelnden Rumpfsektionen abbilden. Die Querstoßlasche kann zumindest abschnittsweise einem Krümmungsradius der zusammenzufügenden Rumpfsektionen angepasst sein. Weiterhin kann die Kupplung der Kupplungsvorrichtung an die Rümpfzellenhäute, die Stringer sowie einen Ringspant mit einer Vielzahl von Verbindungselementen, insbesondere mit Nietelementen erfolgen. Zusätzlich können die Stringer mittels einer Mehrzahl von Stützwinkeln mit dem Ringspant verbunden sein.

Erfindungsgemäß ist weiterhin ein Verfahren zur Herstellung einer Kupplungsvorrichtung nach der Erfindung zur Verbindung von Rumpfsektionen zur Schaffung einer Flugzeugrumpfzelle mit den Schritten vorgesehen: Biegen eines zunächst ebenen, rechteckförmigen Materialstreifens bis ein vorgegebener Krümmungsradius entsprechend der Radien der zu verbindenden Rumpfsektionen erreicht ist, und Herausarbeiten der geometrischen Struktur der Kupplungsvorrichtung aus dem Materialstreifen.

Das Herausarbeiten der geometrischen Struktur der Kupplungsvorrichtung kann durch spangebende Verfahren, insbesondere durch Fräsen, Drehen oder Bohren, erfolgen.

Dadurch, dass der Materialstreifen zunächst einem Radius der zusammenzufügenden Rumpfsektionen angepasst wird, kann der Verschnitt in dem nachfolgenden Bearbeitungsschritt, in dem das Herausarbeiten der geometrischen Struktur aus dem vollen Materialstreifen erfolgt, minimiert werden. Darüber hinaus erlaubt diese Vorgehensweise einen belastungsgerechten Faserverlauf innerhalb der Kupplungsvorrichtung und das weitgehend spannungsfreie Zusammenfügen der beiden Rumpfsektionen und der Kupplungsvorrichtung. Der Materialstreifen ist bevorzugt mit einem Aluminiumlegierungsmaterial, einer Edelstahllegierung, einer Titanlegierung oder einer beliebigen Kombination hiervon gebildet. Alternativ kann die Kupplungsvorrichtung auch mit einem Faserverbundwerkstoff, insbesondere im so genannten TFP-Prozess, hergestellt werden. Hierbei werden mit einem Epoxidharz vorimprägnierte Kohlefaserstränge (so genannte "Prepreg"-Verstärkungsfaserstränge) oder trockene Kohlefaserverstärkungsstränge bevorzugt automatisiert und in kraftflussoptimierter Richtung auf einem geeigneten Trägermaterial in einer Vielzahl von übereinander angeordneten Lagen abgelegt und in ihrer Lage fixiert. Durch das TFP-Verfahren lassen sich komplexe dreidimensionale Strukturen, wie sie für die Herstellung der Kupplungsvorrichtung erforderlich sind, realisieren. In Abhängigkeit vom verwendeten Ausgangsmaterial - bereits durchtränktes "Prepreg"-Material oder trockene Kohlefaserverstärkungsstränge - kann entweder unmittelbar eine Aushärtung in einem Ofen bzw. Autoklaven erfolgen oder es muss vorab noch eine Imprägnierung des trockenen Faservorformlings mit einem geeigneten Kunststoffmaterial, wie beispielsweise einem Epoxidharz oder dergleichen erfolgen.

Eine Weiterbildung des Verfahrens sieht vor, dass das Herausarbeiten der komplexen geometrischen Struktur des Kupplungsvorrichtungs bevorzugt auf einer CNC-Bearbeitungsseinrichtung, insbesondere durch Fräsen, Drehen, Bohren oder einer beliebigen Kombination dieser spanenden Bearbeitungstechniken erfolgt. Im Fall von erhöhten Anforderungen an die Maßhaltigkeit der Kupplungsvorrichtung können alternativ spanfreie Bearbeitungsmaßnahmen, wie beispielsweise Ätz- oder Funkerosionsverfahren zum Einsatz kommen.

In der Zeichnung zeigen:
- Figur 1 einen Querstoßbereich zwischen zwei Rumpfsektionen mit einer Kupplungsvorrichtung,
- Figur 2 einen vergrößerten Ausschnitt aus der Fig. 1 mit dem Kupplungsvorrichtung, der Rumpfzellenhaut, den Stringern, den Stützwinkeln sowie dem Ringspant,
- Figur 3 eine perspektivische Ansicht von zwei im Bereich einer Scheitellinie (bzw. Basislinie) der Rumpfsektionen aneinander stoßenden Kupplungsvorrichtungen ohne Rumpfzellenstrukturelemente,
- Figur 4 eine Ausführungsvariante der Kupplungsvorrichtung, und
- Figuren 5 und 6 ein Fertigungsverfahren zur Herstellung der Kupplungsvorrichtung.

In der Zeichnung weisen einige der funktionsgleichen konstruktiven Elemente oder Komponenten jeweils dieselbe Bezugsziffer auf.

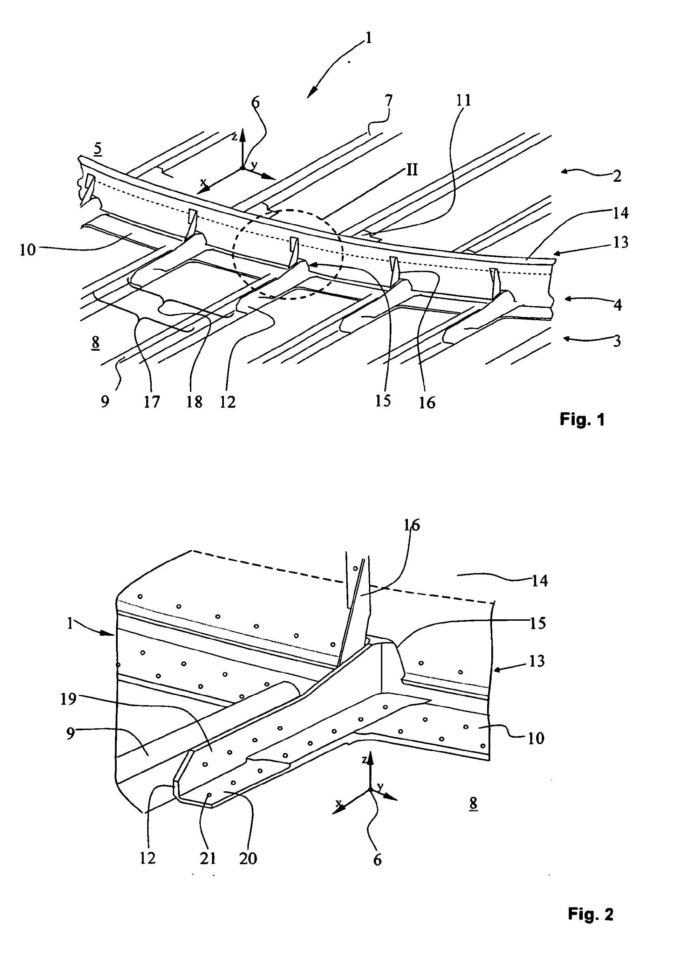

Die Figur 1 zeigt eine Kupplungsvorrichtung in einem Gluerstoßbereich zwischen zwei zusammengefügten Rumpfsektionen.

Das erfindungsgemäße Kupplungselement 1 oder die erfindungsgemäße Kupplungsvorrichtung 1 oder das Kupplungsteil ist zur Verbindung von zwei Rumpfsektionen 2, 3 in einem Querstoßbereich 4 bzw. Quemahtbereich von zwei Rumpfzellenhäuten oder Hautabschnitten vorgesehen. Auf einem ersten Rumpfzellen-Hautabschnitt 5 der ersten Rumpfsektion 2 verläuft entlang einer x-Achse des in den Figuren 1 bis 4 dargestellten xyz-Koordinatensystems 6 der auf diese Weise gebildeten (nicht dargestellten) Rumpfzelle eines Flugzeugs eine Mehrzahl von Stringern in einer Längsrichtung der Rumpfzelle, von denen in der Figur 1 nur ein Stringer mit dem Bezugszeichen 7 versehen ist. Die x-Achse verläuft entlang einer Rumpf-Längsachse der aus den Rumpfsektionen gebildeten Rumpfzelle. Entsprechend ist auf einem zweiten Rumpfzellen-Hautabschnitt 8 der zweiten Rumpfsektion 3 eine Mehrzahl von Stringern angeordnet, von denen ebenfalls nur einem Stringer 9 repräsentativ für die übrigen ein Bezugszeichen zugeordnet ist. Die Stringer 7, 9 verlaufen bevorzugt in einer Längsrichtung der zugehörigen Rumpfsektion jeweils parallel und gleichmäßig beabstandet zueinander über den Umfang der Rumpfsektionen 2, 3 hinweg verteilt.

Die Kupplungsvorrichtung oder Verbindungsvorrichtung 1 weist einen Ringspant-Kupplungsteil-Grundkörper oder ein in Spantrichtung verlaufendes Kupplungsteil mit einer sich in Umfangsrichtung der Rumpfsektionen erstreckenden Querstoßlasche 10 und einer Querstoßrippe 13 sowie ein quer zum Kupplungsteil-Grundkörper verlaufendes Stringerkupplungsteil 12 in Form eines Querfortsatzes mit einem Stringerkupplungsteil-Rippenfuß oder Auflageteil 20 und einer Stringerkupplungsteil-Rippe auf. Die Mittelebene der Längserstreckung der Stringerkupplungsteil-Rippe 19 verläuft vorzugsweise eben und verläuft winklig und vorzugsweise senkrecht zur Mittelebene der Längserstreckung des Stringerkupplungsteil-Rippenfußes 20. Weiterhin verläuft die Mittelebene der Längserstreckung der Querstoßrippe 13 vorzugsweise eben und verläuft winklig und vorzugsweise senkrecht zur Mittelebene der Längserstreckung der Querstoßlasche 10.

Bei einer Montage der Kupplungsvorrichtung 1 mit zwei Rumpfsektionen liegt die Querstoßlasche 10 auf dem Querstoßbereich 4 der zu verbindenden Rumpfhaut-Abschnitte, wobei die Unterseite der Querstoßlasche 10 vorzugsweise den Verbindungsbereich der Randflächen der miteinander zu verbindenden Rumpfzellen-Hautabschnitte überdeckt.

Die Unterseite der Querstoßlasche 10 ist vorzugsweise in Längsrichtung der Querstoßlasche 10 gekrümmt geformt und kann zur Anpassung an anzukoppelnde Teile auch abschnittsweise ebene Flächenabschnitte aufweisen. Vorzugsweise ist die der Innenseite der Rumpfsektion zugewandte Querstoßlasche 10 der Krümmung der Rumpfsektionen 2, 3 je nach Anwendungsfall angepasst oder möglichst genau angepasst, um ein weitgehend spannungsfreies Zusammenfügen der beiden Rumpfsektionen 2, 3 zu ermöglichen. Die Querstoßlasche 10und insbesondere dessen den Rumpfzellen-Hautabschnitten zugewandte Unterseite oder Anlagefläche ist länglich gebildet und kann eine Grundflächengeometrie aufweisen, die zwei zumindest abschnittsweise parallele, in Längrichtung der Querstoßlasche verlaufende Seitenränder hat und insbesondere auch rechteckförmig gebildet sein kann. Bei Montage der Kupplungsvorrichtung 1 mit den Rumpfsektionen verläuft die Längsrichtung der Querstoßlasche 10 entlang der einander zugewandten Randsseiten der zu verbindenden Rumpfzellen-Hautabschnitte und in Umfangsrichtung der Rumpfzellenhaut 5. Auch verläuft die Querstoßlasche 10 zwischen den Stringern, die mit den zu verbindenden Rumpfzellen-Hautabschnitten verbunden sind, wobei die Stringer die Querstoßlasche 10 quer zu deren in Umfangsrichtung der Rumpfsektionen 2, 3 verlaufenden Längsrichtung auch teilweise überlappen können.

Auf beiden Seiten der Querstoßlasche 10 erstreckt sich z.B. jeweils symmetrisch eine Mehrzahl von insbesondere rippenförmig ausgebildeten Querfortsätzen oder Stringerkupplungsteilen 12, deren Längsrichtung quer zur Längsrichtung der Querstoßlaschen 10 verlaufen und von denen in den Figuren lediglich zwei Stringerkupplungsteile 11, 12 repräsentativ für die übrigen ein Bezugszeichen zugeordnet ist. Die Querstoßlasche 10 ist mit der Querstoßrippe 13, die insbesondere die Form eines Steges hat, einstückig verbunden und ist insbesondere einstückig mit diesem hergestellt. Die Mittelebene der Querstoßrippe verläuft quer und insbesondere senkrecht zur Anlagefläche der zugehörigen Querstoßlasche 10.

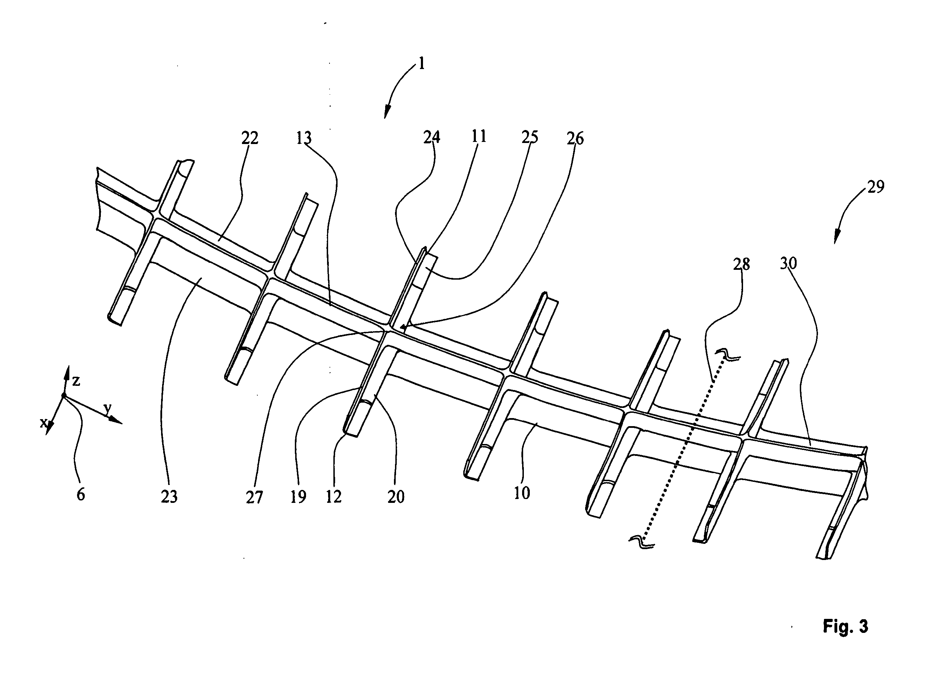

Die Kupplungsvorrichtung weist zumindest zwei Paare von Stringerkupplungsteilen 12 auf, die sich seitlich des Kupplungsteil-Grundkörpers erstrecken, wobei jedes Paar zwei Stringerkupplungsteile 12 aufweist, die in Bezug auf die Längsrichtung der Querstoßlasche 10 entgegengesetzt zueinander verlaufen und in Bezug auf die Längsrichtung der Querstoßlasche 10 einander gegenüber liegen (Figur 3). Vorzugsweise erstrecken sich jeweils zwei Stringerkupplungsteile 12 von demselben Bereich des Kupplungsteil-Grundkörpers ausgehend in zueinander entgegen gesetzten Richtungen. Die Stringerkupplungsteil-Rippe 19 kann ausgehend von dem Stringerkupplungsteil-Rippenfußes 20 und insbesondere von einem Seitenrand des Stringerkupplungsteil-Rippenfußes 20 und entlang desselben verlaufen. Insbesondere können die Querstoßrippen 20 von entgegengesetzt zueinander verlaufenden und einander gegenüber liegenden Stringerkupplungsteilen 12 in demselben Bereich der Querstoßrippe 13 zusammentreffen. Die Stringerkupplungsteil-Rippen 20 von in einer Längsrichtung des Kupplungsteil-Grundkörpers gesehen hintereinander liegenden Stringerkupplungsteilen 12 können sich von den vorderen (in Richtung der rechten Seite der Symmetrieachse 28 in der Draufsicht auf Figur 3) oder hinteren (in Richtung der linken Seite der Symmetrieachse 28 in der Draufsicht auf Figur 3) Randseiten der Rippenfüße 20 der Stringerkupplungsteile 12 aus erstrecken.

Die Querstoßrippe 13 ist bei der Montage der Rumpfsektionen mit einem Ringspant 14 gekuppelt. Die Querstoßrippe 13 und der jeweilige Ringspant 14 können als separate Teile miteinander verbunden oder einstückig verbunden sein. Die Querstoßrippe 13 ist in der Darstellung der Fig. 1 vom Ringspant 14 verdeckt ist und daher nur gestrichelt angedeutet. Der Ringspant 14 kann eine Mehrzahl von Vertiefungen oder Ausnehmungen aufweisen, die z.B. leicht trapezförmig geschnitten sein können. In den Figuren ist nur einer Ausnehmung 15 ein Bezugszeichen zugeordnet.

Die Kupplungsvorrichtung 1 ist mittels einer Mehrzahl in der Figur 1 nicht dargestellter, matrixartig angeordneter Verbindungselemente (Figur 2) mit den Rumpfzellenhäuten 5, 8, den Stringern 7, 9, dem Ringspant 14 sowie einer Mehrzahl von Stützwinkeln, von denen ein Stützwinkel mit der Bezugsziffer 16 versehen ist, fest verbunden. Die Befestigung oder Anordnung der Stützwinkel 16 kann insbesondere an einer Seitenwand der Stringerkupplungs-Rippe 19 und einer Seitenwand der Querstoßrippe 13 erfolgen, wobei der Grundkörper des Stützwinkels 16 an der Seitenwand der Stringerkupplungs-Rippe 19 angebracht ist und das dieser gegenüber liegende Ende des Grundkörpers mittels einer Lasche oder einem an dem Grundkörper angewinkelten Fuß an einer Seitenwand der Querstoßrippe angebracht ist. Als Verbindungselemente können beispielsweise Nietelemente, Schrauben, Klebeverbindungen oder geeignete Klemm- bzw. Pressverbindungsteile eingesetzt werden. Alternativ oder zusätzlich hiervon können auch thermische Fügeverfahren, wie insbesondere das Reibrührschweißverfahren oder Laserschweißverfahren Anwendung finden. Im Fall der thermischen Fügeverfahren und der Klebeverfahren können Befestigungsbohrungen für die Verbindungselemente entbehrlich sein. Ein Abstand 17 zwischen den Längsachsen von zwei benachbarten Stringern kann jeweils mit einem Abstand 18 zwischen den Längsachsen von zwei benachbarten Stringerkupplungsteilen 12 korrespondieren.

Erfindungsgemäß wird zur Herstellung der Kupplungsvorrichtung 1 dieselbe aus einem zunächst noch rechteckförmigen Materialstreifen bzw. einer Platte aus dem Vollen herausgearbeitet, wobei dem Materialstreifen bevorzugt vor dem Herausarbeiten der Kupplungsvorrichtung 1 der erforderliche Krümmungsradius verliehen wird, um den Verschnitt zu minimieren und einen günstigen Faserverlauf zu erzielen.

Die Fig. 2 zeigt einen, durch einen gestrichelten Kreis in Fig. 1 symbolisierten, vergrößerten Ausschnitt aus der Fig. 1. Durch das Koordinatensystem 6 wird die Lage der einzelnen Elemente der Rumpfstruktur im Raum veranschaulicht.

Jeder Stringerkupplungsteil-Rippenfuß 20 der Querfortsätze oder der Stringerkupplungsteile 12 weisen eine untere Fläche oder Anlagefläche auf, die bei Montage der Kupplungsvorrichtung der Innenfläche der Rumpfzellenhaut zugewandt ist. Bei der Montage der Kupplungsvorrichtung ist der Stringer 9 mit der ersten, in Bezug auf die Querstoßlasche 10 senkrecht stehenden Stringerkupplungsteil-Rippe 19 des Stringerkupplungsteils 12 und die zweite Rumpfzellenhaut 8 ist mit einer zweiten, in der Ebene der Querstoßlasche 10 liegenden Stringerkupplungsteil-Rippe 20 des Querfortsatzes 12 durch eine Vielzahl von Nietelementen, von denen ein Nietelement repräsentativ für alle übrigen Nietelemente mit der Bezugsziffer 21 versehen ist, verbunden. Die in etwa senkrecht aufeinander stoßenden Flansche 19, 20 bilden eine in etwa L-förmige Querschnittsgeometrie des Querfortsatzes 12. Der spiegelsymmetrisch zum Querfortsatz 12 an den Querstoßlasche 10 anschließende Querfortsatz 11 weist die gleiche geometrische Gestalt wie der Querfortsatz 12 auf. Die zweite Rumpfzellenhaut 8 ist mit der Querstoßlasche 10 und der Ringspant 14 ist mit dem senkrechten Steg 13 durch Nietelemente verbunden. Mittels des Stützwinkels 16 erfolgt eine Verbindung zwischen dem Ringspant 14 und dem Stringer 9. Die trapezförmig ausgestaltete Ausnehmung 15 ist erforderlich, damit der Ringspant 14 auf die Kupplungsvorrichtung "aufgesetzt" bzw. der Ringspant 14 mit dem Steg 13 vernietet werden kann.

Im Gegensatz zu den Stringerkupplungsteilen 11,12, die jeweils eine im Wesentlichen L-förmige Querschnittsgeometrie aufweisen, weist die Querstoßlasche 10 der Kupplungsvorrichtung 1 eine im Wesentlichen umgekehrt T-förmige Querschnittsgeometrie auf, die durch den mittig auf dem Querstoßlasche 10 senkrecht verlaufenden Steg 13 (parallel zur z-Achse) und den abschnittsweise in der xy-Ebene des Koordinatensystems 6 liegenden Querstoßlasche 10 als Basis gebildet ist.

Die Fig. 3 zeigt jeweils zwei aneinander stoßende Kupplungsvorrichtungen in einer freigeschnittenen räumlichen Ansicht, ohne angeschlossene Rumpfstrukturelemente. Das Koordinatensystem 6 veranschaulicht wiederum die Lage bzw. die Orientierung der einzelnen Komponenten im Raum.

Die Verbindung von zwei Rumpfsektionen kann grundsätzlich mit nur einem in etwa kreisförmigen, ovalen, elliptischen bzw. einer beliebigen Umfangsgeometrie der Rumpfsektion folgenden Kupplungsvorrichtung erfolgen, bevorzugt werden jedoch mindestens zwei vorzugsweise aneinander schließende Kupplungsvorrichtungen eingesetzt, die innenseitig in der Rumpfsektion angeordnet sind und sich über deren Umfang im Quernahtbereich erstrecken, das heißt deren Umfang "abbilden".

Die Kupplungsvorrichtung 1 (vgl. insb. Fig. 1) weist die Stringerkupplungsteile 11,12 auf, die beidseitig der Querstoßlasche 10 an dieser anschließen. Auf der Querstoßlasche 10 ist bevorzugt mittig der senkrechte Steg 13 angeordnet, der die Querstoßlasche 10 im Querstoßbereich 4 bzw. im Quemahtbereich in zwei Längsflansche 22,23 teilt, die im Wesentlichen zur Kupplung der Rumpfzellenhäute 5, 8 dienen. Das rippenartige Stringerkupplungsteil 12 umfasst die beiden Stringerkupplungsteil-Rippenfüße 19, 20, während der Querfortsatz 11 entsprechend ausgestaltete erste und zweite Flansche 24,25 aufweist. In einem Kreuzungsbereich 26 zwischen den beiden Stringerkupplungsteilen 11,12 und dem Querstoßlasche 10 sowie dem Steg 13 befindet sich eine senkrecht stehende, zapfenförmige Verdickung 27 mit einer im Wesentlichen quadratischen Querschnittsgeometrie (von oben, entgegen der Richtung der z-Achse gesehen). Weitere, nicht mit einer Bezugsziffer versehene Verdickungen erstrecken sich über die Kupplungsvorrichtung 1 hinweg jeweils in Kreuzungsbereichen inzwischen zwei Stringerkupplungsteilen und dem Steg 13. In der Fig. 3 ist zu erkennen, dass die Kupplungsvorrichtung 1 entlang der y-Achse des Koordinatensystems 6 gekrümmt ausgestaltet ist, um sich möglichst spannungsfrei an einen vorgegebenen Krümmungsradius der zu fügenden Rumpfsektionen anzupassen. In Relation zur y-Achse ist der Querstoßlasche 10 eben ausgeführt.

Die Kupplungsvorrichtung 1 schließt im Bereich einer Basislinie 28 der zusammen zu fügenden (nicht dargestellten) Rumpfsektionen an eine zweite, korrespondierend zur ersten Kupplungsvorrichtung 1 ausgebildete Kupplungsvorrichtung 29 an. Die Stringerkupplungsteile der Kupplungsvorrichtung 29 sind - bei ansonsten völlig identischem Aufbau - jedoch spiegelsymmetrisch an der Querstoßlasche 30 angeordnet, da die Kupplungsvorrichtung 29 im Bereich der Basislinie 28 an die Kupplungsvorrichtung 1 (im Wesentlichen nahtlos) angrenzt. In einer alternativen, nicht dargestellten Ausführungsvariante können die Stringerkupplungsteile an den Kupplungsvorrichtungen 1, 29 auch gleichgerichtet angeordnet sein. Bevorzugt werden mindestens drei, entsprechend zu den dargestellten Kupplungsvorrichtungen 1,29 ausgebildete (segmentierte) Kupplungsvorrichtungen zur Verbindung von jeweils zwei Rumpfsektionen verwendet (120° Umfangsteilung). Die Kupplungsvorrichtungen 1,29 stoßen hierbei bevorzugt im Wesentlichen jeweils nahtlos aneinander. Die Segmentierung erlaubt eine bessere fertigungstechnische Handhabbarkeit der Kupplungsvorrichtungen 1,29, was insbesondere bei Rumpfsektionen mit großen Querschnittsabmessungen von Bedeutung ist.

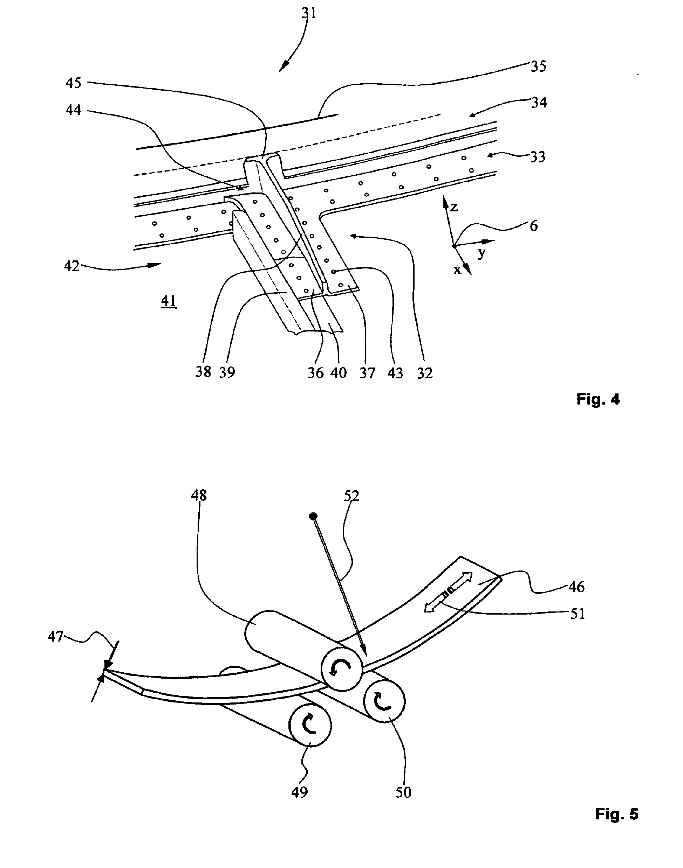

Die Fig. 4 zeigt eine Ausführungsvariante der Kupplungsvorrichtung. Im Unterschied zu der in den Fig. 1 bis 3 dargestellten Version - bei der die Kupplung der Stringerkupplungsteile der Kupplungsvorrichtung über die senkrechten Flanken der Stringer geschieht - erfolgt die Kupplung der Stringer an die Stringerkupplungsteile bei der Ausgestaltung nach Maßgabe der Fig. 4 an den Stringerfüßen bzw. den Stringerflanschen.

Eine Kupplungsvorrichtung 31 umfasst eine Vielzahl von Stringerkupplungsteilen, von denen in der Darstellung der Fig. 4 lediglich ein vorderer Querfortsatz 32 dargestellt ist. Der Querfortsatz 32 schließt sich an eine Querstoßlasche 33 an. Die Querstoßlasche 33 ist in der Richtung der y-Achse des Koordinatensystems 6 gekrümmt ausgebildet, das heißt der lokalen Krümmung der zu verbindenden Rumpfsektionen angepasst. In etwa mittig auf der Querstoßlasche 33 verläuft ein, strichliniert dargestellter senkrechter Steg 34, so dass die Querstoßlasche 33 eine im Wesentlichen umgekehrt T-förmige Querschnittsgeometrie aufweist. Ein Ringspant 35 einer nicht dargestellten Rumpfsektion ist mit einer Vielzahl von nicht eingezeichneten Verbindungselementen, insbesondere mit Nietelementen verbunden. Der Querfortsatz 32 weist entsprechend der Querstoßlasche 33 eine gleichfalls umgekehrt T-förmige Querschnittsgeometrie mit zwei in der xy-Ebene liegenden Flanschen 36,37 auf. Mittig auf den Flanschen 36,37 verläuft ein senkrechter Steg 38 zur Versteifung des Querfortsatzes 32. Ein Stringer 39 hat eine im Wesentlichen Ω-förmig Querschnittsgeometrie mit einem unterseitig anschließenden Stringerfuß 40. Die Verbindung des Querfortsatzes 32 erfolgt - im Gegensatz zu den Ausführungsvarianten der Fig. 1 bis 3 - über den Stringerfuß 40 und die darunter liegende Rumpfzellenhaut 41 einer Rumpfsektion 42 und nicht mittels einer (senkrecht stehend, parallel zur z-Achse) Stringerflanke. Die eigentliche mechanische Verbindung zwischen dem Stringerfuß 40, der Rumpfzellenhaut 41 sowie dem Querfortsatz 32 erfolgt durch eine Vielzahl von Verbindungselementen, insbesondere Nietelementen, von denen lediglich ein Nietelement 43 stellvertretend für die restlichen mit einer Bezugsziffer versehen ist. In einem Kreuzungsbereich 44 zwischen dem Querfortsatz 32 und der Querstoßlasche 33 befindet sich wiederum eine zapfenförmige Verdickung 45 mit einem angenähert quadratischen Querschnitt, um die erforderliche statische Festigkeit der Kupplungsvorrichtung 31 zu gewährleisten.

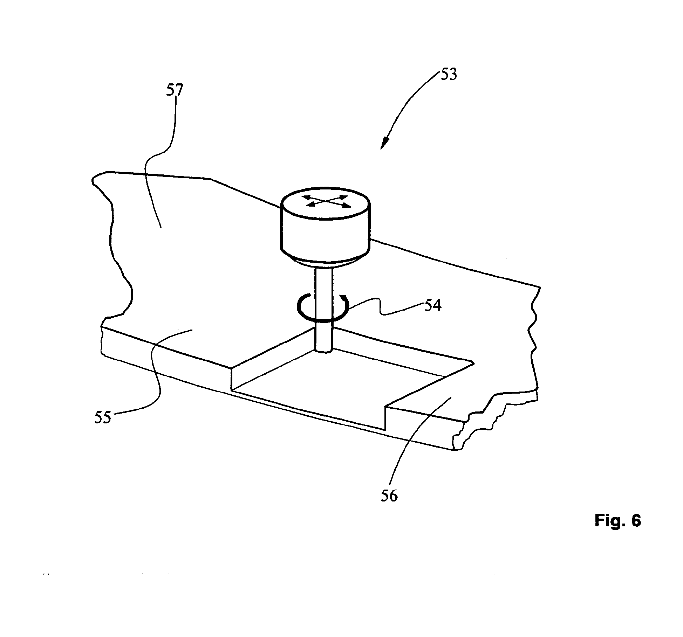

Die Fig. 5,6 illustrieren schematisch das Verfahren zur Herstellung der erfindungsgemäß einstückig ausgebildeten und insbesondere einstückig hergestellten Kupplungsvorrichtung.

Wie aus der Fig. 5 ersichtlich, wird in einem ersten Verfahrensschritt ein anfänglich noch ebener rechteckförmiger Materialstreifen 46 mit einer geeigneten Dicke 47 bzw. eine längliche Platte solange durch eine Anordnung von beispielsweise drei Andruckrollen 48 bis 50 - deren nicht mit einer Bezugsziffer versehene Rotationsachsen geeignet zueinander beabstandet sind - in Richtung eines Doppelpfeils 51 geführt, bis ein Krümmungsradius 52 erreicht ist, der im Wesentlichen einem Krümmungsradius bzw. einer lokalen Krümmung der mittels der Kupplungsvorrichtung zusammenzufügenden Rumpfsektionen entspricht. Eine Länge des Materialstreifens 46 wird bevorzugt so bemessen, dass diese ungefähr mindestens einem Drittel des Innenumfangs der beiden zusammenzufügenden Rumpfsektionen im Quemahtbereich entspricht. Die Andruckrollen 48 bis 50 rotieren hierbei in oder entgegen der Richtung der drei weißen Pfeile.

In einem zweiten Verfahrensschritt wird die Endkontur der herzustellenden oder späteren Kupplungsvorrichtung - mit sämtlichen Stringerkupplungsteilen, Stegen, Verdickungen in den Kreuzungsbereichen, dem Querstoßlasche mit Steg sowie allen Bohrungen für die einzubringenden Verbindungselemente einstückig aus dem vollen Materialstreifen 46, bevorzugt durch spanende Bearbeitungstechniken, wie beispielsweise Fräsen, Drehen oder Bohren herausgearbeitet. Zu diesem Zweck wird der Materialstreifen 46 mittels nicht dargestellter Spannvorrichtungen in seiner Lage im Raum definiert positioniert und mittels einer CNC-Bearbeitungseinrichtung 53 mit einem beispielsweise in Richtung des Pfeils 54 rotierenden Werkzeug 55, insbesondere in der Gestalt eines Fräsers oder Bohrers, spanend bearbeitet. In der Darstellung der Fig. 6 sind bereits erste Ansätze der Stringerkupplungsteile 55,56 und der Querstoßlasche 57 herausgearbeitet. Bei erhöhten Anforderungen an die Maßhaltigkeit der Kupplungsvorrichtung können anstelle von spanenden Bearbeitungsmethoden auch spanlose Fertigungstechniken, wie beispielsweise Funkenerosionsverfahren, Drahterosionsverfahren, Plasmaätzverfahren, chemische Ätzverfahren oder dergleichen treten.

Bevorzugt ist der Materialstreifen 46 zur Herstellung der späteren Kupplungsvorrichtung mit einem leicht automatisiert bearbeitbaren Aluminiumlegierungsmaterial, mit einer Edelstahllegierung oder mit einer Titanlegierung gebildet.

Durch die im ersten Verfahrensschritt erfolgende Krümmung des Materialstreifens 46 entsprechend dem vorgegebenen Krümmungsradius 52 der zusammenzufügenden Rumpfsektionen, wird der Verschnitt beim Herausarbeiten der Kupplungsvorrichtung aus dem vollen Materialstreifen verringert, ein günstiger Faserverlauf in der späteren Kupplungsvorrichtung erreicht und zugleich ein weitgehend spannungsfreier Einbau der Kupplungsvorrichtung ermöglicht.

Die erfindungsgemäße Kupplungsvorrichtung kann bereits herstellungsseitig mit einem Endbereich einer der beiden zusammen zufügenden Rumpfsektionen verbunden sein (einseitige Vorausrüstung). Alternativ kann die beidseitige Kupplung der Kupplungsvorrichtung in den Quemahtbereich auch erst beim Zusammenfügen der beiden Rumpfsektionen erfolgen.

Grundsätzlich lassen sich mit der erfindungsgemäßen Kupplungsvorrichtung Rumpfsektionen in klassischer Aluminiumbauweise, in CFK-Bauweise oder in Mischbauweise (so genannte Aluminium-CFK-Hybridbauweise) zu vollständigen Rumpfzellen für Flugzeuge zusammenfügen.

### Bezugszeichenliste

| | |
|---|---|
| 1 | Kupplungsvorrichtung |
| 2 | Rumpfsektion (erste) |
| 3 | Rumpfsektion (zweite) |
| 4 | Querstoßbereich |
| 5 | erste Rumpfzellenhaut |
| 6 | Koordinatensystem |
| 7 | Stringer |
| 8 | zweite Rumpfzellenhaut |
| 9 | Stringer |
| 10 | Querstoßlasche |
| 11 | Querfortsatz |
| 12 | Querfortsatz |
| 13 | Steg |
| 14 | Ringspant |
| 15 | Ausnehmung |
| 16 | Stützwinkel |
| 17 | Abstand (Stringer) |
| 18 | Abstand (Stringerkupplungsteile) |
| 19 | erster Flansch (senkrecht) oder Stringerkupplungsteil-Rippe |
| 20 | zweiter Flansch (horizontal) oder Stringerkupplungsteil-Rippenfuß |
| 21 | Nietelement |
| 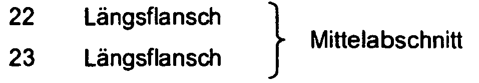 | |
| 24 | erster Flansch (senkrecht) |
| 25 | zweiter Flansch (horizontal) |
| 26 | Kreuzungsbereich |
| 27 | Verdickung |
| 28 | Basislinie |
| 29 | Kupplungsvorrichtung |
| 30 | Querstoßlasche |
| 31 | Kupplungsvorrichtung |
| 32 | Querfortsatz |
| 33 | Querstoßlasche |
| 34 | Steg |
| 35 | Ringspant |
| 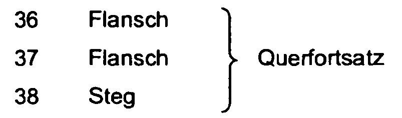 | |
| 39 | Stringer |
| 40 | Stringerfuß |
| 41 | Rumpfzellenhaut |
| 42 | Rumpfsektion |
| 43 | Nietelement |
| 44 | Kreuzungsbereich |
| 45 | Verdickung |
| 46 | Materialstreifen |
| 47 | Dicke (Materialstreifen) |
| 48 | Andruckrolle |
| 49 | Andruckrolle |
| 50 | Andruckrolle |
| 51 | Doppelpfeil |
| 52 | Krümmungsradius |
| 53 | CNC-Bearbeitungsseinrichtung |
| 54 | Pfeil |
| 55 | Querfortsatz |
| 56 | Querfortsatz |
| 57 | Querstoßlasche |

## Patentansprüche

1. Kupplungsvorrichtung (1, 29, 31) zur Kupplung von Rumpfsektionen (2, 3, 42) in einem Querstoßbereich (4), wobei die Rumpfsektionen (2, 3, 42) jeweils zumindest einen Rumpfzellen-Hautabschnitt (5, 8, 41) und eine Mehrzahl von Ringspanten (14, 35) und Stringern (7, 9, 39) aufweisen, umfassend:
■ eine Querstoßlasche (10, 30, 33) zur Kupplung von zwei Rumpfzellen-Hautabschnitten (5, 8, 41), ■ eine Mehrzahl von sich von der Querstoßlasche (10, 30, 33) erstreckenden rippenartigen Stringerkupplungsteile (11, 12, 32) zur Kupplung der Stringer (7, 9, 39), **dadurch** gekennzeichenet, dass die Kupplungs-vorrichtung (1, 29, 31)
■ einen mittig auf der Querstoßlasche (10, 30, 33) verlaufenden, senkrecht stehenden Steg (13, 34, 38) zur Kupplung eines Ringspants (14,35) aufweist, und dass • die Mehrzahl der rippenartigen Stringenkupplungsteile (11, 12, 32) sich beidseitig von der Querstoβlasche (10, 30, 33) erstrecken.

2. Kupplungsvorrichtung (1, 29, 31) nach Patentanspruch 1, **dadurch gekennzeichnet, dass** die Kupplungsvorrichtung (1, 29, 31) einstückig ausgebildet und insbesondere einstückig hergestellt ist.

3. Kupplungsvorrichtung (1, 29, 31) nach Patentanspruch 1 oder 2, **dadurch gekennzeichnet, dass** Verdickungen (27, 45) in Kreuzungsbereichen (26, 44) zwischen den Stringerkupplungsteilen (11, 12, 32) und dem Steg (13, 34, 38) ausgebildet sind.

4. Kupplungsvorrichtung (1, 29, 31) nach einem der voranstehenden Patentansprüche, **dadurch gekennzeichnet, dass** die Kupplungsvorrichtung (1, 29, 31) auf jeder Seite der Längserstreckung der Querstoßlasche jeweils zwei Stringerkupplungsteile (11, 12, 32) aufweist.

5. Kupplungsvorrichtung (1, 29, 31) nach einem der voranstehenden Patentansprüche, **dadurch gekennzeichnet, dass** die Kupplungsvorrichtung (10, 30, 33) eine Mehrzahl von Bohrungen zur Kupplung der Kupptungsvorrichtung (10, 30, 33) an die Rumpfzellenhäute (5, 8, 41), die Stringer (7, 9, 39) sowie einen Ringspant (14, 35) mit einer Mehrzahl von Verbindungselementen, insbesondere mit Nietelementen (21, 43), aufweist.

6. Kupplungsvorrichtung (1, 29, 31) nach einem der voranstehenden Patentansprüche 1 bis 6, **dadurch gekennzeichnet, dass** die Kupplungsvorrichtung (1, 29, 31) eine Mehrzahl von Stützwinkeln (16) zur Kupplung der Kupplungsvorrichtung (1, 29, 31) mit jeweils einem Stringer (7, 9, 39) aufweist.

7. Kupplungsvorrichtung (1, 29, 31) nach einem der voranstehenden Patentansprüche, **dadurch gekennzeichnet, dass** die Stringerkupplungsteile (11, 12, 32) mit einer Z-förmigen Querschnittsgeometrie oder eine L-förmige Querschnittsgeometrie aufweisen.

8. Kupplungsvorrichtung (1, 29, 31) nach einem der Patentansprüche 1 bis 6, **dadurch gekennzeichnet, dass** die Stringerkupplungsteile (11, 12, 32) eine Ω-förmige Querschnittsgeometrie oder eine umgekehrt T-förmige Querschnittsgeometrie aufweisen.

9. Verfahren zur Herstellung einer Kupplungsvorrichtung nach einem der Patentansprüche 1 bis 8 zur Verbindung von Rumpfsektionen zur Schaffung einer Flugzeugrumpfzelle, umfassend die Schritte:
■ Biegen eines zunächst ebenen, rechteckförmigen Materialstreifens (46) bis ein vorgegebener Krümmungsradius (52) entsprechend der Radien der zu verbindenden Rumpfsektionen (2, 3, 42) erreicht ist, und
■ Herausarbeiten der geometrischen Struktur der Kupplungsvorrichtung (1, 29, 31) aus dem Materialstreifen (46).

10. Verfahren nach Patentanspruch 9, **dadurch gekennzeichnet, dass** das Herausarbeiten der geometrischen Struktur der Kupplungsvorrichtung (1, 29, 31) durch spangebende Verfahren, insbesondere durch Fräsen, Drehen oder Bohren, erfolgt.

11. Kombination aus einer Kupplungsvorrichtung (1, 29, 31) nach einem der Patentansprüche 1 bis 8 und zumindest einer Rumpfsektion, **dadurch gekennzeichnet, dass** Abstände (18) zwischen den Anlageflächen der Stringerkupplungsteile (11, 12, 32) an den Stringern ±10% gleich sind den Abständen (17) zwischen den Anlageflächen der Stringer (7, 9, 39) an den Stringerkupplungsteilen (11, 12, 32).

12. Kombination nach Anspruch 11, **dadurch gekennzeichnet, dass** mindestens zwei Kupplungsvorrichtungen (1, 29, 31) einen Umfang zumindest einer der zu kuppelnden Rumpfsektionen abbilden.

13. Kombination nach Anspruch 11 oder 12, **dadurch gekennzeichnet, dass** die Querstoßlasche (10, 30, 33) einem Krümmungsradius (52) der zusammenzufügenden Rumpfsektionen angepasst ist.

14. Kombination nach einem der Ansprüche 11 bis 13, **dadurch gekennzeichnet, dass** die Kupplung der Kupplungsvorrichtung (10, 30, 33) an die Rumpfzellenhäute (5, 8, 41), die Stringer (7, 9, 39) sowie einen Ringspant (14, 35) mit einer Vielzahl von Verbindungselementen, insbesondere mit Nietelementen (21, 43), erfolgt.

15. Kombination nach einem der Ansprüche 11 bis 14, **dadurch gekennzeichnet, dass** die Stringer (7, 9, 39) mittels einer Mehrzahl von Stützwinkeln (16) mit dem Ringspant (14, 35) verbunden sind.

## Claims

1. A coupling device (1, 29, 31) for purposes of coupling fuselage sections (2, 3, 42) in a transverse butt joint region (4), wherein the fuselage sections (2, 3, 42) in each case, have at least one fuselage cell skin section (5, 8, 41) and a pluralityplurality of annular frames (14, 35) and stringers (7, 9, 39), comprising:
■ a transverse butt strap (10, 30, 33) for purposes of coupling two fuselage cell skin sections (5, 8, 41),
■ a plurality of rib-type stringer coupling parts (11, 12, 32) extending from the transverse butt strap (10, 30, 33) for purposes of coupling the stringers (7, 9, 39), **characterised in that**,
■ the coupling device (1, 29, 31) has a web (13, 34, 38) running centrally on, and standing at right-angles to, the transverse butt strap (10, 30, 33), for purposes of coupling an annular frame (14, 35), and
■ **in that** the plurality of rib-type stringer coupling parts (11, 12, 32) extend in both sides from the transverse butt strap (10, 30, 33).

2. The coupling device (1, 29, 31) in accordance with claim 1, **characterised in that** the coupling device (1, 29, 31) is of integral design and in particular is of integral manufacture.

3. The coupling device (1, 29, 31) in accordance with claim 1 or 2, **characterised in that** thickened sections (27, 45) are designed in intersecting regions (26, 44) between the stringer coupling parts (11, 12, 32) and the web (13, 34, 38).

4. The coupling device (1, 29, 31) in accordance with one of the preceding claims, **characterised in that** the coupling device (1, 29, 31) has two stringer coupling parts (11, 12, 32) on each side of the longitudinal extent of the transverse butt strap.

5. The coupling device (1, 29, 31) in accordance with one of the preceding claims, **characterised in that** the coupling device (10, 30, 33) has a plurality of bores for purposes of coupling the coupling device (10, 30, 33) to the fuselage cell skins (5, 8, 41), the stringers (7, 9, 39), and also an annular frame (14, 35) with a plurality of connecting elements, in particular with riveting elements (21, 43).

6. The coupling device (1, 29, 31) in accordance with one of the preceding claims 1 to 6, **characterised in that** the coupling device (1, 29, 31) has a plurality of supporting brackets (16) for purposes of coupling the coupling device (1, 29, 31) in each case with a stringer (7, 9, 39).

7. The coupling device (1, 29, 31) in accordance with one of the preceding claims, **characterised in that** the stringer coupling parts (11, 12, 32) have a Z-shaped cross-sectional geometry, or an L-shaped cross-sectional geometry.

8. The coupling device (1, 29, 31) in accordance with one of the claims 1 to 6, **characterised in that** the stringer coupling parts (11, 12, 32) have an Ω-shaped cross-sectional geometry or a reverse T-shaped cross-sectional geometry.

9. A method for the manufacture of a coupling device in accordance with one of claims 1 to 8, for connecting fuselage sections for purposes of creating an aircraft fuselage cell, comprising the steps:
■ bending of an initially straight, rectangular-shaped material strip (46) until a prescribed radius of curvature (52) corresponding to the radii of the fuselage sections (2, 3, 42) to be connected is achieved, and
■ development of the geometrical structure of the coupling device (1, 29, 31) from the material strip (46).

10. The method in accordance with claim 9, **characterised in that** the development of the geometrical structure of the coupling device (1, 29, 31) takes place by means of chip-forming methods, in particular by milling, turning or drilling.

11. A combination of a coupling device (1, 29, 31) in accordance with one of claims 1 to 8, and at least one fuselage section, **characterised in that** distances (18) between the contact surfaces of the stringer coupling parts (11, 12, 32) on the stringers are the same within ±10% as the distances (17) between the contact surfaces of the stringers (7, 9, 39) on the stringer coupling parts (11, 12, 32).

12. The combination in accordance with claim 11, **characterised in that** at least two coupling devices (1, 29, 31) represent a periphery of at least one of the fuselage sections to be coupled.

13. The combination in accordance with claim 11 or 12, **characterised in that** the transverse butt strap (10, 30, 33) is matched to a radius of curvature (52) of the fuselage sections to be joined together.

14. The combination according to one of claims 11 to 13, **characterised in that** the coupling of the coupling device (10, 30, 33) to the fuselage cell skins (5, 8, 41), the stringers (7, 9, 39), and also an annular frame (14, 35) takes place with a plurality of connecting elements, in particular with riveting elements (21, 43).

15. The combination according to one of Claims 11 to 14, **characterised in that** the stringers (7, 9, 39) are connected with the annular frame (14, 35) by means of a plurality of supporting brackets (16).

## Revendications

1. Dispositif de couplage (1, 29, 31) pour coupler des sections de fuselage (2, 3, 42) dans une zone de jointure transversale (4), dans lequel les sections de fuselage (2, 3, 42) présentent respectivement au moins un tronçon d'enveloppe de cellules de fuselage (5, 8, 41) et une pluralité de couples annulaires (14, 35) et de lisses (7, 9, 39), comprenant :
■ un couvre-joint transversal (10, 30, 33) pour coupler deux tronçons d'enveloppe de cellules de fuselage (5, 8, 41),
■ une pluralité de pièces de couplage de lisses en forme de nervures (11, 12, 32) s'étendant depuis le couvre-joint transversal (10, 30, 33) pour coupler les lisses (7, 9, 39), **caractérisé en ce que** le dispositif de couplage (1, 29, 31)
■ présente un montant vertical (13, 34, 38) s'étendant sur le centre du couvre-joint transversal (10, 30, 33) pour coupler un couple annulaire (14,35) et que
■ la pluralité de pièces de couplage de lisses en forme de nervures (11, 12, 32) s'étend des deux côtés du couvre-joint transversal (10, 30, 33).

2. Dispositif de couplage (1, 29, 31) selon la revendication 1, **caractérisé en ce que** le dispositif de couplage (1, 29, 31) est formé de manière monobloc et en particulier est fabriqué de manière monobloc.

3. Dispositif de couplage (1, 29, 31) selon la revendication 1 ou 2, **caractérisé en ce que** des épaississements (27, 45) sont formés dans des zones de croisement (26, 44) entre les pièces de couplage de lisses (11, 12, 32) et le montant (13, 34, 38).

4. Dispositif de couplage (1, 29, 31) selon l'une des revendications précédentes, **caractérisé en ce que** le dispositif de couplage (1, 29, 31) présente respectivement deux pièces de couplage de lisses (11, 12, 32) sur chaque côté du prolongement longitudinal du couvre-joint transversal.

5. Dispositif de couplage (1, 29, 31) selon l'une des revendications précédentes, **caractérisé en ce que** le dispositif de couplage (10, 30, 33) présente une pluralité d'alésages pour coupler le dispositif de couplage (10, 30, 33) aux enveloppes de cellules de fuselage (5, 8, 41), aux lisses (7, 9, 39) ainsi qu'à un couple annulaire (14, 35) avec une pluralité d'éléments de liaison, en particulier avec des éléments de rivetage (21, 43).

6. Dispositif de couplage (1, 29, 31) selon l'une des revendications précédentes 1 à 6, **caractérisé en ce que** le dispositif de couplage (1, 29, 31) présente une pluralité d'angles d'appui (16) pour coupler le dispositif de couplage (1, 29, 31) à respectivement une lisse (7, 9, 39).

7. Dispositif de couplage (1, 29, 31) selon l'une des revendications précédentes, **caractérisé en ce que** les pièces de couplage de lisses (11, 12, 32) présentent une géométrie de section en Z ou une géométrie de section en L.

8. Dispositif de couplage (1, 29, 31) selon l'une des revendications 1 à 6, **caractérisé en ce que** les pièces de couplage de lisses (11, 12, 32) présentent une géométrie de section en Ω ou présentent une géométrie de section en T inversée.

9. Procédé de fabrication d'un dispositif de couplage selon l'une des revendications 1 à 8 pour relier des sections de fuselage afin de créer une cellule de fuselage d'avion, comprenant les étapes de :
■ cintrage d'une bande de matériau (46) d'abord plane et rectangulaire jusqu'à ce qu'un rayon de courbure prédéfini (52) correspondant aux rayons des sections de fuselage à relier (2, 3, 42) soit obtenu, et
■ façonnage de la structure géométrique du dispositif de couplage (1, 29, 31) de la bande de matériau (46).

10. Procédé selon la revendication 9, **caractérisé en ce que** le façonnage de la structure géométrique du dispositif de couplage (1, 29, 31) s'effectue par des procédés d'enlèvement de copeaux, en particulier par fraisage, tournage ou perçage.

11. Combinaison d'un dispositif de couplage (1, 29, 31) selon l'une des revendications 1 à 8 et d'au moins une section de fuselage, **caractérisée en ce que** des écarts (18) entre les surfaces d'appui des pièces de couplage de lisses (11, 12, 32) sur les lisses sont égaux à ±10% aux écarts (17) entre les surfaces d'appui des lisses (7, 9, 39) sur les pièces de couplage de lisses (11, 12, 32).

12. Combinaison selon la revendication 11, **caractérisée en ce qu'**au moins deux dispositifs de couplage (1, 29, 31) forment un périmètre d'au moins une des sections de fuselage à coupler.

13. Combinaison selon la revendication 11 ou 12, **caractérisée en ce que** le couvre-joint transversal (10, 30, 33) est adapté à un rayon de courbure (52) des sections de fuselage à réunir.

14. Combinaison selon l'une des revendications 11 à 13, **caractérisée en ce que** le couplage du dispositif de couplage (10, 30, 33) sur les enveloppes de cellules de fuselage (5, 8, 41), les lisses (7, 9, 39) ainsi qu'un couple annulaire (14, 35) s'effectue avec une pluralité d'éléments de liaison, en particulier avec des éléments de rivetage (21, 43).

15. Combinaison selon l'une des revendications 11 à 14, **caractérisée en ce que** les lisses (7, 9, 39) sont reliées au couple annulaire (14, 35) via une pluralité d'angles d'appui (16).
